# EUROPEAN PATENT APPLICATION

(11) **EP 3 275 549 A1**
(43) Date of publication of application: **31.01.2018**
(21) Application number: 16769052.8
(22) Date of filing: 18.03.2016
(51) Int. Cl.: B01L 3/00, G01N 35/08

(54) **MICROFLUIDIC DEVICE AND SAMPLE ANALYSIS DEVICE COMPRISING SAME**

(30) Priority: 24.03.2015 KR 20150040960; 22.10.2015 KR 20150147551
(71) Applicant: Samsung Electronics Co., Ltd., Gyeonggi-do 16677 (KR)
(72) Inventor: LEE, Young-goun, Seoul 05680 (KR); MIN, Jung-ki, Yongin-si Gyeonggi-do 16993 (KR); PARK, Ki-cheol, Hwaseong-si Gyeonggi-do 18396 (KR); KANG, Hyun-suk, Suwon-si Gyeonggi-do 16666 (KR); LEE, Jong-gun, Yongin-si Gyeonggi-do 16950 (KR); CHOI, Jong-yup, Seoul 08395 (KR)
(74) Representative: Grootscholten, Johannes A.M.
(86) International application number: PCT/KR2016/002774
(87) International publication number: WO 2016/153234

(57) **Abstract**

A microfluidic device may include: a body including a chamber in which a sample is received, the body being rotatable so that the sample received in the chamber is moved due to a centrifugal force; an insertion part arranged at a center of rotation of the body and including at least a part that is recessed so that a driver for rotating the body is coupled to the insertion part; and a sample injection part including at least a part that extends from the insertion part toward the chamber to be inclined with respect to a rotational axis of the body, the sample injection part allowing a part of a sample injection instrument for injecting the sample into the chamber to be inserted into the sample injection part.

## Description

### [Technical Field]

The present disclosure relates to microfluidic devices and sample analysis apparatuses including the same.

### [Background Art]

In general, microfluidic devices refer to devices used to perform biological or chemical reactions by manipulating a small amount of fluid. A microfluidic device includes a microfluidic structure provided in a body that is in any of various forms such as a disc or a chip.

The microfluidic structure includes a chamber in which a fluid may be received or stored, a channel through which the fluid may flow, and a valve for controlling the fluid's flow, and the chamber, the channel, and the valve are arranged in any of various ways in the body.

A device in which a microfluidic structure is provided in a body in the form of a chip so that a test including a biochemical reaction may be performed on a small chip is referred to as a biochip. In particular, a device manufactured to perform multiple processes and operations on a single chip is referred to as a lab-on-a-chip.

A driving pressure is required to transfer a fluid in a microfluidic structure. A capillary pressure or a pressure applied by an additional pump is used as the driving pressure. Recently, a centrifugal force-based microfluidic device in which a microfluidic structure is provided on a body in the form of a disc and a series of operations are performed by moving a fluid by using a centrifugal force has been suggested, which is referred to as a lab compact disc (CD) or a lab-on-a-CD.

A sample injected into a centrifugal force-based microfluidic device moves away from a center of rotation of the microfluidic device due to a centrifugal force.

The sample is injected into the microfluidic device through a sample injection part provided on the microfluidic device by using a sample injection instrument such as a pipette or a syringe. However, when the sample is injected, the sample may be attached to around the sample injection part, particularly, to a top surface of the microfluidic device.

When the microfluidic device to which the sample is attached is mounted on a sample analysis apparatus and is rotated, the sample attached to the top surface of the sample microfluidic device may contaminate surfaces of the microfluidic device, may contaminate elements in the sample analysis apparatus, such as a light source, due to the rotation, and when the sample is attached to the light source or an outer surface of an analysis chamber, may cause an error in a result value of the microfluidic device.

Also, when a sample infected with disease-causing bacteria is injected into the microfluidic device, other people may be infected by a part of the sample remaining on a surface of the microfluidic device.

### [Disclosure]

### [Technical Problem]

Provided are a microfluidic device and a sample analysis apparatus including the same that may prevent, when a sample is injected into the microfluidic device, from being attached to a top surface of the microfluidic device.

Provided are a microfluidic device and a sample analysis apparatus including the same that may prevent, even when the microfluidic device to which a sample is attached is rotated, elements in the sample analysis apparatus from being contaminated due to the sample.

### [Technical Solution]

According to an aspect of an exemplary embodiment, a microfluidic device includes: a body including a chamber in which a sample is received, the body being rotatable so that the sample received in the chamber is moved due to a centrifugal force; an insertion part arranged at a center of rotation of the body and including at least a part that is recessed so that a driver for rotating the body is coupled to the insertion part; a sample injection part including at least a part that extends from the insertion part toward the chamber to be inclined with respect to a rotational axis of the body, the sample injection part allowing a part of a sample injection instrument for injecting the sample into the chamber to be inserted into the sample injection part; and a shielding member including at least a part arranged on at least one of the sample injection part, the insertion part, and the chamber, the shielding member being configured to, when the sample is injected into the chamber through the sample injection instrument, prevent the injected sample from leaking to the outside of the sample injection part.

The sample injection part may include: a sample injection hole formed in the insertion part; and a sample injection channel configured to connect the sample injection hole and the chamber and including at least a part that extends to be inclined with respect to the rotational axis.

The body may include an upper plate arranged at the top of the chamber and a lower plate arranged on the bottom of the chamber, wherein at least a part of the sample injection channel is arranged under the upper plate.

The sample injection channel may include a portion whose width decreases toward the chamber.

The sample injection channel may include a movement guide surface for guiding a movement of the sample injection instrument having passed through the sample injection hole.

A position guide surface for guiding a position of a tip portion of the sample injection instrument to the sample injection hole may be formed in a portion of the insertion part around the sample injection hole.

A projection may be formed on at least one of the sample injection channel and the chamber.

The body may include a cut portion which faces the insertion part and is cut, wherein the cut portion is arranged over the sample injection part.

The body may include a mark for indicating at least one of a position of the sample injection part, an insertion direction of the sample injection instrument into the sample injection part, and an amount of the sample to be injected into the chamber.

The sample injection channel may be formed so that a sample injection direction of the sample injection instrument inserted along the sample injection channel is inclined with respect to a wall surface of the chamber.

The body may include a window through which an inside of the chamber is viewed.

The microfluidic device may further include an absorption sheet configured to absorb the sample attached to the body and to cover a portion around the cut portion.

A thickness of the body along the rotational axis may range from about 1 mm to about 5 mm.

A thickness of the body along the rotational axis may range from about 5 mm to about 9 mm.

A remaining sample receiver configured to receive a remaining sample remaining on a surface of the insertion part and a stopping protrusion configured to prevent the remaining sample received in the remaining sample receiver from overflowing may be provided on the insertion part.

At least a part of the shielding member may be inserted into the sample injection part and may include an elastic material.

The shielding member may further include at least one uneven portion formed on an inner circumferential surface of the shielding member and a projecting portion formed on an outer circumferential surface of the shielding member.

At least a part of the shielding member may be arranged on the insertion part to be located outside the sample injection part and has a film shape.

The shielding member may include a shielding surface that crosses an extension direction of the sample injection part, wherein a portion of the shielding surface is thinner than other portions so that the sample injection instrument passes through the shielding surface.

The portion of the shielding surface may have a linear shape, a cross shape, or a circular shape.

The shielding member may include a through-hole having a diameter that is less than a diameter of the sample injection instrument.

The shielding member may be arranged inside the chamber and may include a porous material.

The sample injection part may be connected between both of end portions of the chamber in a direction in which the sample flows.

According to an aspect of another exemplary embodiment, a sample analysis apparatus includes the microfluidic device.

### [Advantageous Effects]

A microfluidic device and a sample analysis apparatus including the same in the one or more exemplary embodiments may prevent a sample from being attached to a top surface of a body by forming a sample injection part on an insertion part disposed at a center of rotation of the body.

Also, the microfluidic device and the sample analysis apparatus may prevent or suppress a sample from overflowing to the outside during a sample injection process by deeply obliquely inserting a sample injection instrument into the body.

### [Description of Drawings]

These and/or other aspects will become apparent and more readily appreciated from the following description of the exemplary embodiments, taken in conjunction with the accompanying drawings in which:
FIG. 1 is a perspective view of a microfluidic device according to an exemplary embodiment;
FIG. 2 is a conceptual plan view illustrating an inside of the microfluidic device according to an exemplary embodiment;
FIG. 3 is a view illustrating a configuration of a sample analysis apparatus including the microfluidic device according to an exemplary embodiment;
FIGS. 4A and 4B are conceptual views for explaining a sample injection part of the microfluidic device according to an exemplary embodiment;
FIGS. 5A and 5B are conceptual views for explaining a sample injection part of the microfluidic device according to a comparative example;
FIG. 6 is a partial perspective view illustrating the sample injection part of the microfluidic device according to an exemplary embodiment;
FIG. 7 is a cut-away perspective view illustrating the sample injection part of the microfluidic device according to an exemplary embodiment;
FIG. 8 is a cross-sectional view illustrating the sample injection part of the microfluidic device according to an exemplary embodiment;
FIGS. 9A and 9B are respectively a plan view and a cross-sectional view for explaining an example in which a projection in the microfluidic device guides a sample injection instrument so that the sample injection instrument is inserted in a certain direction;
FIG. 10 is a plan view illustrating a chamber and the sample injection part of the microfluidic device according to an exemplary embodiment;
FIGS. 11A and 11B are respectively a perspective view and a partial plan view illustrating a modification of the body of the microfluidic device according to an exemplary embodiment;
FIG. 12 is a partial plan view illustrating a modification of the body of the microfluidic device according to an exemplary embodiment;
FIG. 13 is a partial perspective view illustrating a modification of the body of the microfluidic device according to an exemplary embodiment;
FIGS. 14A and 14B are perspective views illustrating an example in which the microfluidic device of FIG. 13 is used;
FIG. 15 is a perspective view of a microfluidic device according to another exemplary embodiment;
FIGS. 16A and 16B are respectively a partial perspective view and a partial cross-sectional view illustrating an insertion part of the microfluidic device of FIG. 15 and a sample injection part formed on the insertion part;
FIG. 17 is a perspective view of a microfluidic device according to another exemplary embodiment;
FIGS. 18A and 18B are respectively a partial perspective view and a partial cross-sectional view illustrating an insertion part of the microfluidic device of FIG. 17 and a sample injection part formed on the insertion part;
FIG. 19 is a cross-sectional view illustrating a modification of the microfluidic device according to an exemplary embodiment;
FIGS. 20A through 20C are perspective views illustrating a shielding member of FIG. 19 according to an exemplary embodiment;
FIGS. 21A and 21B are views illustrating an example in which the sample injection instrument is applied to the sample injection part into which the shielding member is inserted;
FIG. 22A is a cross-sectional view for explaining the microfluidic device including a shielding member having a shielding surface;
FIG. 22B is a perspective view of the shielding member of FIG. 22A;
FIG. 23 is a cross-sectional view for explaining an example in which at least a part of the shielding member is disposed on the insertion part;
FIG. 24 is a cross-sectional view for explaining an example in which at least a part of the shielding member is located in the chamber;
FIGS. 25A and 25B are cross-sectional views illustrating an example in which the sample injection instrument is applied to the shielding member;
FIG. 26 is a plan view of the microfluidic device including a modified chamber according to an exemplary embodiment; and
FIGS. 27A and 27B are views illustrating an example in which the sample injection instrument is applied to the microfluidic device of FIG. 26.

### [Mode for Invention]

The inventive concept now will be described more fully hereinafter with reference to the accompanying drawings, in which elements of the inventive concept are shown. The inventive concept may, however, be embodied in many different forms and should not be construed as limited to the exemplary embodiments set forth herein. Rather, these embodiments are provided so that this disclosure will be thorough and complete, and will fully convey the scope of the inventive concept to one of ordinary skill in the art. Like reference numerals refer to like elements throughout. In the drawings, the thicknesses of layers and regions and the sizes of components may be exaggerated for clarity.

As used herein, the term "and/or" includes any and all combinations of one or more of the associated listed items. Expressions such as "at least one of" when preceding a list of elements, modify the entire list of elements and do not modify the individual elements of the list.

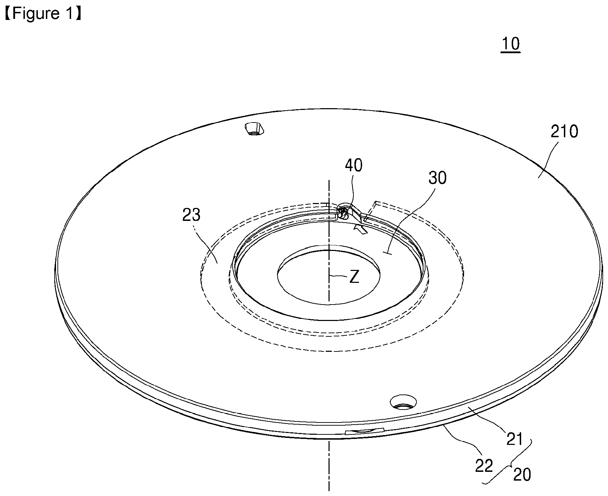

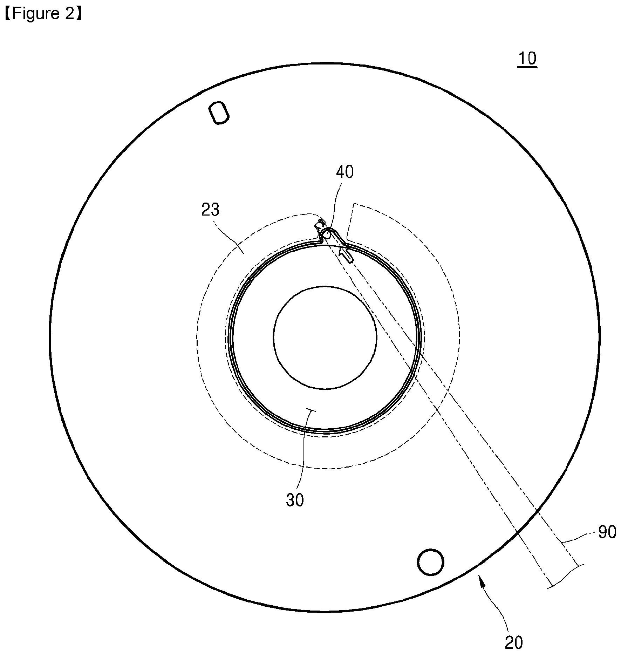

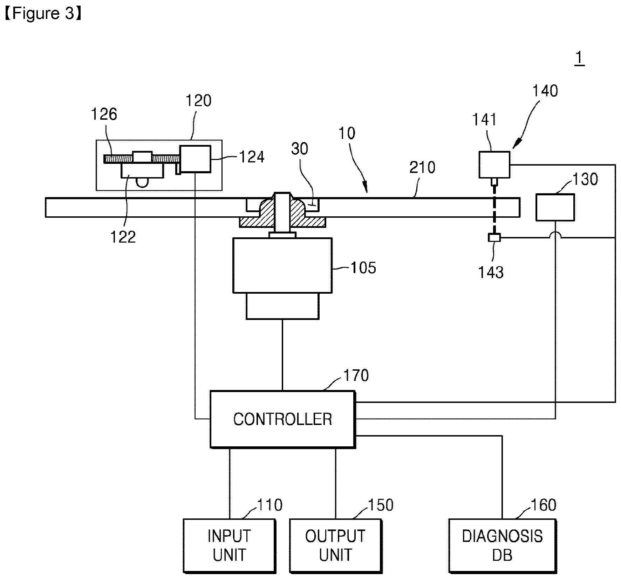

FIG. 1 is a perspective view of a microfluidic device 10 according to an exemplary embodiment. FIG. 2 is a conceptual plan view illustrating an inside of the microfluidic device 10 according to an exemplary embodiment. FIG. 3 is a view illustrating a configuration of a sample analysis apparatus 1 including the microfluidic device 10 according to an exemplary embodiment.

Referring to FIG. 1, the microfluidic device 10 according to an exemplary embodiment includes a body 20 that is rotatable.

For example, the body 20 may have a disc shape. An insertion part 30 is disposed at a center of rotation of the body 20. At least a part of the insertion part 30 may be recessed so that a driver 105 (see FIG. 3) for rotating the body 20 is coupled to the insertion part 30. For example, the insertion part 30 may have a circular hole structure that passes through the body 20 along a rotational axis Z. However, a shape of the insertion part 30 is not limited to a circular shape, and may be a polygonal shape or an elliptic shape. Also, a structure of the insertion part 30 is not limited to a hole structure, and may be a groove structure.

The body 20 may be easily molded, and a surface of the body 20 may be formed of a plastic material that is biologically inactive, for example, acryl or polydimethylsiloxane (PDMS). However, a material of the body 20 is not limited thereto, and may be any material having chemical and biological stability, high optical transmission, and excellent machinability.

A microfluidic structure may be provided in the body 20. For example, a chamber 23 in which a sample may be received, a channel (not shown) through which the sample flows, and a valve (not shown) that is used to open or close the channel may be provided in the body 20.

The body 20 may include a plurality of plates. For example, the body 20 may include an upper plate 21 and a lower plate 22. The upper plate 21 may be disposed on the top of the chamber 23 and the lower plate 22 may be disposed on the bottom of the chamber 23. Each of the upper plate 21 and the lower plate 22 may be formed of thermoplastic resin.

For example, the chamber 23 and the channel may be formed in the body 20 by forming an engraved structure corresponding to the chamber 23 and the channel on contact surfaces of the upper plate 21 and the lower plate 22 of the body 20 and adhering the upper plate 21 and the lower plate 22. The upper plate 21 and the lower plate 22 may be adhered to each other by using any of various methods such as a method using an adhesive tape, ultrasound welding, or laser welding.

Alternatively, a partition for defining the chamber 23 and the channel may be provided between the upper plate 21 and the lower plate 22 of the body 20. The body 20 may have any of various other shapes.

The microfluidic structure provided in the body 20 may be disposed for a specific purpose in biochemical treatment, for example, centrifugal separation of a fluid sample, immune serum reaction, gene analysis, gene extraction, or gene amplification. For example, the microfluidic device 10 may include a unit for biochemical treatment of a sample. Examples of biochemical treatment of a sample may include culture, mixing, separation, and enrichment of the sample. An inside of the microfluidic device 10 may be designed in various ways according to the use of the microfluidic device 10, and a detailed arrangement in the microfluidic device 10 will not be explained.

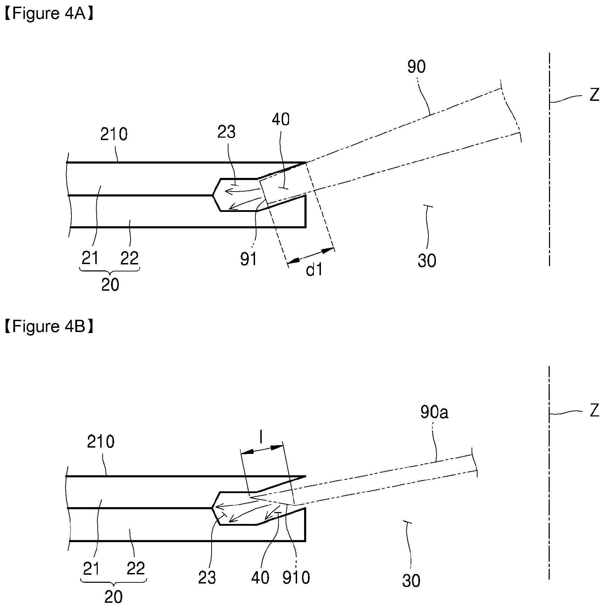

The microfluidic device 10 according to an exemplary embodiment may include a sample injection part 40 for injecting a sample into the chamber 23, which will be explained below with reference to FIG. 4A.

Referring to FIG. 3, the sample analysis apparatus 1 according to an exemplary embodiment may include the microfluidic device 10, the driver 105 for rotating the microfluidic device 10, a data reader 130, a valve opening device 120, a tester 140, an input unit 110, an output unit 150, a diagnosis database (DB) 160, and a controller 170 for controlling each element.

A part of the driver 105 may be inserted into the insertion part 30 of the microfluidic device 10, and the driver 105 may rotate the microfluidic device 10. The driver 105 may be a spindle motor.

Although not shown, the driver 105 may include a motor drive for controlling an angular position of the microfluidic device 10. For example, the motor drive may use a step motor or a direct current (DC) motor.

The data reader 130 reads data stored in the microfluidic device 10 and transmits the read data to the controller 170, and the controller 170 drives the sample analysis apparatus 1 by operating each element based on the read data. The data reader 130 may be, for example, a barcode reader.

The valve opening device 120 that is provided to open and close valves of the microfluidic device 10 may include an external energy source 122, and moving units for moving the external energy source 122 to a valve that is to be opened.

The external energy source 122 that emits electromagnetic waves may be a laser source that emits a laser beam, or a light-emitting diode or a Xenon lamp that emits visible light or infrared light. When the external energy source 122 is a laser source, the external energy source 122 may include at least one laser diode.

The moving units for adjusting a position or a direction of the external energy source 122 so that energy is concentrated on a desired portion of the microfluidic device 10 may include a driving motor 124 and a gear part 126 on which the external energy source 122 is mounted and that is configured to move the external energy source 122 to a position over a valve that is to be opened as the driving motor 124 rotates. The moving units 124 and 126 may be implemented by using various mechanisms.

The tester 140 includes at least one light-emitter 141 and a light-receiver 143 that is disposed to correspond to the light-emitter 141 and receives light transmitted through a reaction area of the microfluidic device 10.

The light-emitter 141 is a light source that blinks at a predetermined frequency. Examples of the light source used as the light-emitter 141 include a semiconductor light-emitting device such as a light-emitting diode (LED) or a laser diode (LD) and a gas discharge lamp such as a halogen lamp or a Xenon lamp.

Also, the light-emitter 141 is disposed so that light emitted from the light-emitter 141 passes through the reaction area and reaches the light-receiver 143.

The light-receiver 143 for generating an electrical signal according to an intensity of incident light may be, for example, a depletion layer photo diode, an avalanche photo diode (APD), or a photomultiplier tube (PMT).

The controller 170 controls the driver 105, the data reader 130, the valve opening device 120, and the tester 140 to smoothly perform an operation of the sample analysis apparatus 1 and searches the diagnosis DB 160 and compares information detected from the tester 140 with the diagnosis DB 160 to determine disease in blood received in the reaction area 24 of the microfluidic device 10.

The input unit 110 for inputting a type of a sample introduced into the microfluidic device 10 and/or a test item according to the type of the injected sample may be provided as a touchscreen on the sample analysis apparatus 1.

The output unit 150 for outputting a diagnosis result and whether a test is finished may include a visual output unit such as a liquid crystal display (LCD), an auditory output unit such as a speaker, or a visual-auditory output unit.

As described above, when a sample is analyzed by the sample analysis apparatus 1, the microfluidic device 10 may be rotated by the driver 105. In this case, a sample is attached to a top surface 210 of the microfluidic device 10, the sample attached to the top surface 210 may be scattered to the outside of the microfluidic device 10 due to a centrifugal force and may contaminate the sample analysis apparatus 1.

The microfluidic device 10 according to an exemplary embodiment may prevent a sample from being attached to the top surface 210 of the microfluidic device 10 when the sample is injected into the sample injection part 40, by improving a structure of the sample injection part 40.

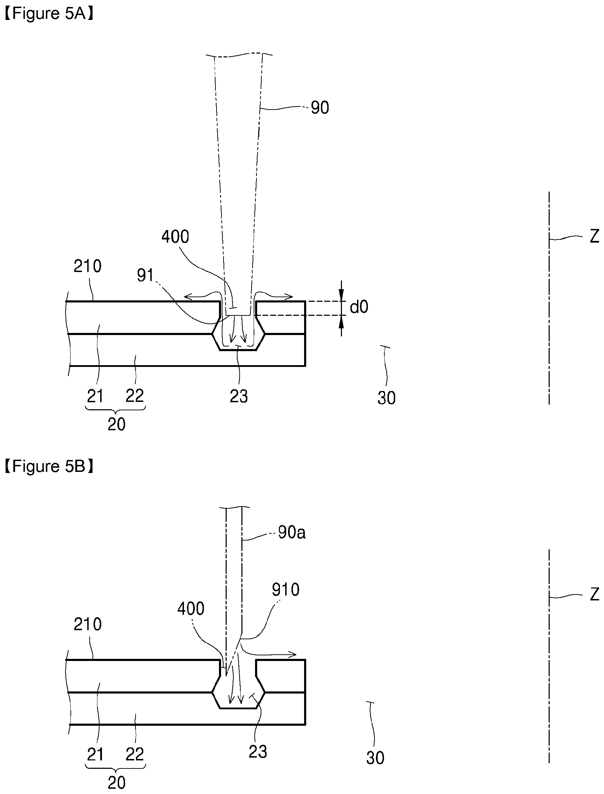

FIGS. 4A and 4B are conceptual views for explaining the sample injection part 40 of the microfluidic device 10 according to an exemplary embodiment. FIGS. 5A and 5B are conceptual views for explaining a sample injection part 400 of the microfluidic device according to a comparative example.

Referring to FIGS. 4A and 4B, at least a part of the sample injection part 40 of the microfluidic device 10 according to an exemplary embodiment may extend from the insertion part 30 toward the chamber 23 to be inclined with respect to the rotational axis Z of the body 20.

Since the sample injection part 40 is formed on the insertion part 30, instead of the top surface 210 of the body 20, the possibility that when a sample is injected by using a sample injection instrument 90, the top surface 210 of the body 20 is contaminated by the sample may be greatly reduced.

Also, since the sample injection part 40 extends to be inclined with respect to the rotational axis Z of the body 20, a tip portion 91 of the sample injection instrument 90 may be deeply inserted into the body 20. For example, since the sample injection instrument 90 is obliquely inserted into the body 20, the sample injection instrument 90 may be inserted to a depth greater than a depth d0 (see FIG. 5A) to which the tip portion 91 of the sample injection instrument 90 is straightly inserted. The tip portion 91 of the sample injection instrument 90 may be inserted to a depth d1 of the body 20.

Accordingly, the microfluidic device 10 according to an exemplary embodiment may use any of various sample injection instruments 90. For example, a pipette may be used as the sample injection instrument 90, or a syringe whose sample discharge surface 910 for discharging a sample is inclined with respect to a longitudinal direction may be used as the sample injection instrument 90a as shown in FIG. 4B. For example, a length I of the sample discharge surface 910 of the syringe may range from about 1.5 mm to about 3.3 mm.

If, unlike in an exemplary embodiment, as shown in FIGS. 5A and 5b, when the sample injection part 400 extends from the top surface 210 of the body 20 in a direction parallel to the rotational axis Z of the body 20, it may be difficult to prevent the body 20 from being contaminated due to a sample when the sample is injected by using the sample injection instrument 90 or 90a.

According to a comparative example, assuming that a pipette is used as the sample injection instrument 90 as shown in FIG. 5A, when the tip portion 91 of the sample injection instrument 90 is located on the sample injection part 400, the tip portion 91 of the sample injection instrument 90 may contact a portion of the top surface 210 of the body 20 around the sample injection part 400, and thus the top surface 210 may be contaminated. Also, when a great amount of a sample is injected by using the sample injection instrument 90, the sample may overflow from the sample injection part 400 and may contaminate the top surface 210 of the body 20 as shown in FIG. 5A.

In addition, since the sample injection part 400 is formed on the opt surface 210, when a sample attached to the top surface 210 of the body 20 is wiped out with gauze, a sample received in the chamber 23 may also be absorbed by the gauze.

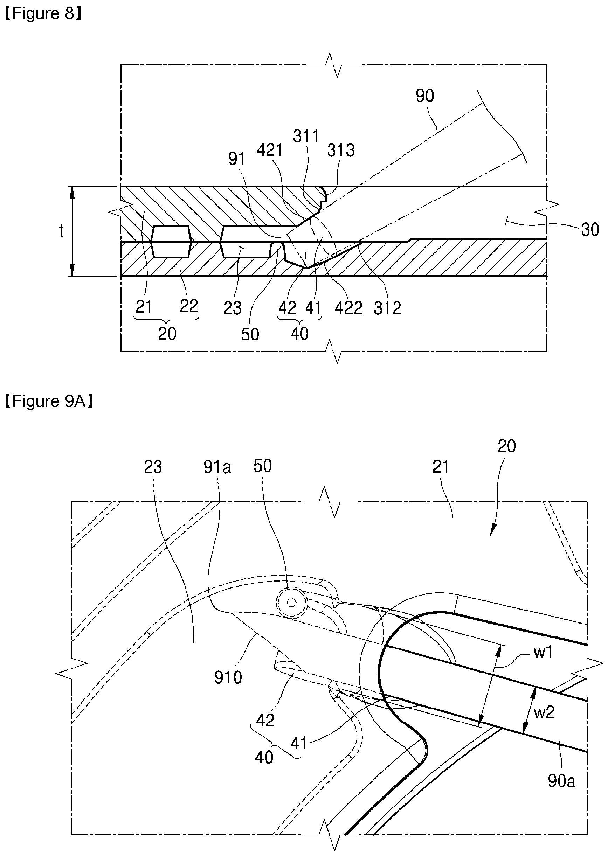

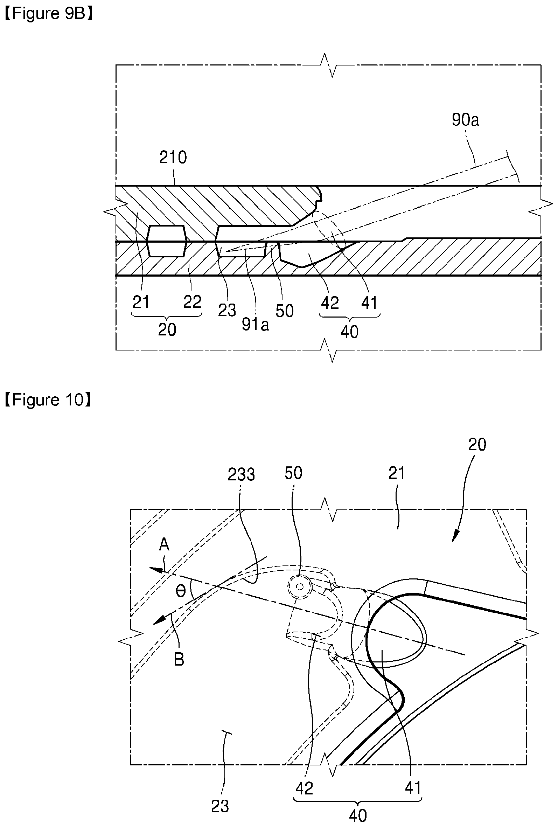

According to another comparative example, when a syringe is used as the sample injection instrument 90a as shown in FIG. 9B, a part of the sample discharge surface 910 of the sample injection instrument 90a may not be inserted into the sample injection part 400. Accordingly, when a sample is injected into the chamber 23, the sample may be attached to the top surface 210 of the body 20.

However, in the microfluidic device 10 according to an exemplary embodiment, since the sample injection part 40 is formed on the insertion part 30, instead of the top surface 210 of the body 20, to be inclined with respect to the rotational axis Z of the body 20, a sample may be prevented or suppressed from being attached to the top surface 210 of the body 20. Also, even when a part of the sample is attached to the top surface 210 of the body 20, since the chamber 23 is not connected to the top surface 2120 of the body 20, the sample injected into the chamber 23 may be prevented from being unexpectedly absorbed when being wiped out.

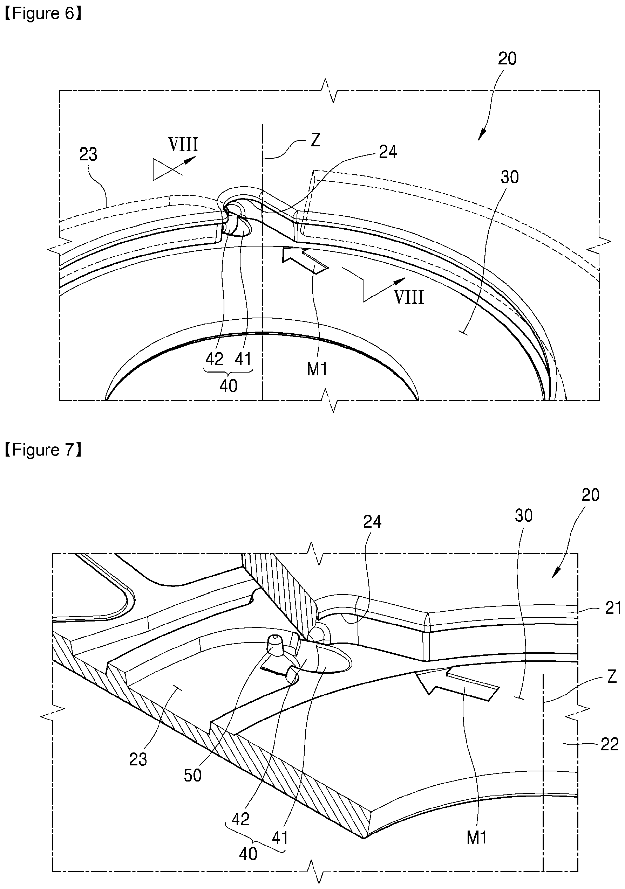

FIG. 6 is a partial perspective view illustrating the sample injection part 40 of the microfluidic device 10 according to an exemplary embodiment. FIG. 7 is a cut-away perspective view illustrating the sample injection part 40 of the microfluidic device 10 according to an exemplary embodiment. FIG. 8 is a cross-sectional view illustrating the sample injection part 40 of the microfluidic device 10 according to an exemplary embodiment. FIG. 8 is a cross-sectional view taken along line VIII-VIII of the microfluidic device 10 of FIG. 6.

Referring to FIGS. 6 through 8, the sample injection part 40 includes a sample injection hole 41 and a sample injection channel 42.

The sample injection hole 41 is formed in the insertion part 30. A size of the sample injection hole 41 may vary according to a size of the sample injection instrument 90 that may be inserted into the sample injection hole 41. For example, a size or a diameter of the sample injection hole 41 may range from about 0.15 mm to about 2 mm.

The sample injection channel 42 may connect the sample injection hole 41 and the chamber 23 and a part of the sample injection channel 42 may extend to be inclined with respect to the rotational axis Z. For example, a length of the sample injection channel 42 may be equal to or greater than 1 mm. For example, a length of the sample injection channel 42 may be equal to or greater than 2.2 mm. For example, a length of the sample injection channel 42 may be equal to or greater than 3.3 mm. The term 'length of the sample injection channel 42' refers to a length of the sample injection channel 42 that extends in an extension direction to be inclined with respect to the rotational axis Z.

At least a part of the sample injection channel 42 is disposed under the upper plate 21. The tip portion 91 of the sample injection instrument 90 inserted into the sample injection channel 42 may be located under the upper plate 21. Accordingly, even when a sample that is injected by using the sample injection instrument 90 overflows from the sample injection part 40, the sample may be prevented from being attached to the top surface 210 of the body 20 due to an arrangement structure of the sample injection part 40.

The sample injection channel 42 may include a portion whose width decreases toward the chamber 23.

For example, the sample injection channel 42 may include movement guide surfaces formed to be inclined with respect to the rotational axis Z of the body 20.

The movement guide surfaces may guide a movement of the sample injection instrument 90 so that the tip portion 91 of the sample injection instrument 90 approaches the chamber 23. Also, since the movement guide surfaces are formed to be inclined with respect to the rotational axis Z of the body 20, even when a sample is attached to the movement guide surfaces, the sample attached to the movement guide surfaces may be moved to the chamber 23 along the movement guide surfaces when a centrifugal force is applied.

The movement guide surfaces include an upper movement guide surface 421 that faces the top of the sample injection instrument 90 and a lower movement guide surface 422 that faces the bottom of the sample injection instrument 90. The top and the bottom of the sample injection instrument 90 may be separated about the center of the sample injection instrument 90.

Each of the upper movement guide surface 421 and the lower movement guide surface 422 may be a continuous surface as shown in FIG. 8. However, a shape of the upper movement guide surface 421 and the lower movement guide surface 422 is not limited thereto, and each of the upper movement guide surface 421 and the lower movement guide surface 422 may be a discontinuous surface, for example, a surface having a stepped portion.

Position guide surfaces for guiding a position of the tip portion 91 of the sample injection instrument 90 to the sample injection hole 41 may be formed in a portion of the insertion part 30 around the sample injection hole 41. Even when a sample is attached to the position guide surfaces, the sample attached to the position guide surfaces may be moved to the sample injection hole 41 along the position guide surfaces when a centrifugal force is applied.

The position guide surfaces include an upper position guide surface 311 that faces the top of the sample injection instrument 90 and a lower position guide surface 312 that faces the bottom of the sample injection instrument 90.

Each of the upper position guide surface 311 and the lower position guide surface 312 may be a continuous surface as shown in FIG. 8. However, a shape of each of the upper position guide surface 311 and the lower position guide surface 312 is not limited thereto, and each of the upper position guide surface 311 and the lower position guide surface 312 may be a discontinuous surface, for example, a surface having a stepped portion.

A stopping protrusion 313 protruding along the rotational axis Z of the body 20 may be formed over the insertion part 30. A sample attached to the insertion part 30 may be prevented from being moved to the top surface 210 of the body 20 due to the stopping protrusion 313.

Referring to FIG. 6, the body 20 may include a cut portion 24 . The cut portion 24 is a portion (or space) which faces the insertion part 30 and is cut (or eliminated) in an upper part of the body 20. The cut portion 24 may be formed over the sample injection part 40. Due to the cut portion 24, the sample injection instrument 90 may be easily obliquely inserted into the sample injection part 40. Also, due to the cut portion 24, a part of the sample injection part 40 may be exposed to the outside, and thus a user may easily detect a position of the sample injection part 40.

The body 20 may include a mark M1 for indicating at least one of a position of the sample injection part 40 and an insertion direction of the sample injection instrument 90 into the sample injection part 40. For example, the mark M1 may be made by engraving an arrow indicating a position of the sample injection part 40 and an insertion direction of the sample injection instrument 90 into the sample injection part 40 in the body 20. However, a shape of the mark M1 and a method of forming the mark M1 are not limited thereto. For example, the mark M1 may be embossed on the body 20, or may be adhered as a separate member to the body 20.

A projection 50 may be formed on at least one of the sample injection channel 42 and the chamber 23. For example, the projection 50 may be formed between the sample injection channel 42 and the chamber 23. The projection 50 may contact the tip portion 91 of the sample injection instrument 90 when the sample injection instrument 90 is inserted into the chamber 23 and may limit a movement of the sample injection instrument 90. That is, the projection 50 may function as a stopper for limiting a movement of the sample injection instrument 90. However, a function of the projection 50 is not limited to a stopper, and may vary according to a size and a type of the sample injection instrument 90. For example, the projection 50 may guide the sample injection instrument 90 so that the sample injection instrument 90 is inserted into the chamber 23 in a certain direction.

FIGS. 9A and 9B are respectively a plan view and a cross-sectional view for explaining an example where the projection 50 of the microfluidic device 10 guides the sample injection instrument 90a so that the sample injection instrument 90a is inserted in a certain direction. Referring to FIGS. 9A and 9B, the projection 50 may be formed between the sample injection channel 42 and the chamber 23. The projection 50 may be eccentrically located at a side of the center of the sample injection channel 42.

The sample injection instrument 90a, for example, a syringe formed so that the sample discharge surface 910 for discharging a sample is inclined with respect to a longitudinal direction of the sample injection instrument 90a, may be inserted into the sample injection part 40. A width w1 of the sample injection channel 42 may be greater than a width w2 of the sample injection instrument 90a. The width w2 of the sample injection instrument 90a may be a width of a needle when the sample injection instrument 90a is a syringe. When the sample injection instrument 90a is inserted into the sample injection part 40, the projection 50 may guide the sample injection instrument 90a so that the sample injection instrument 90a is inserted into the chamber 23 in a certain direction. The projection 50 may guide the sample injection instrument 90a to provide insertion at an orientation that maximizes the flow of the sample in the direction of the chamber, thereby reducing the possibility of the sample flowing out of the chamber and onto exterior surfaces of the microfluidic device.

The sample injection instrument 90a may pass through the sample injection channel 42 and may be guided in a predetermined direction by the projection 50, and a tip portion 91a of the sample injection instrument 90a may be inserted into the chamber 23. Accordingly, the entire sample discharge surface 910 of the sample injection instrument 90a may be received in the body 20. Accordingly, when a sample is injected, the possibility that the sample is discharged to the outside may be minimized and the sample may be prevented from being attached to the top surface 210 of the body 20.

Although the projection 50 is eccentrically located at a side of the center of the sample injection channel 42 in FIG. 9A, a position of the projection 50 may be changed according to needs.

FIG. 10 is a plan view illustrating the chamber 23 and the sample injection part 40 of the microfluidic device 10 according to an exemplary embodiment. Referring to FIG. 10, the sample injection channel 42 may be formed so that a sample injection direction of the sample injection instrument 90 inserted along the sample injection channel 42 is inclined with respect to a wall surface 233 of the chamber 23. For example, an angle θ formed between an extension direction A of the sample injection channel 42 and a tangent direction B of the wall surface 233 of the chamber 23 facing the sample injection channel 42 may be an acute angle. Accordingly, a sample injected through the sample injection instrument 90 may be prevented from colliding with the wall surface 233 of the chamber 23 and flowing back to the sample injection channel 42.

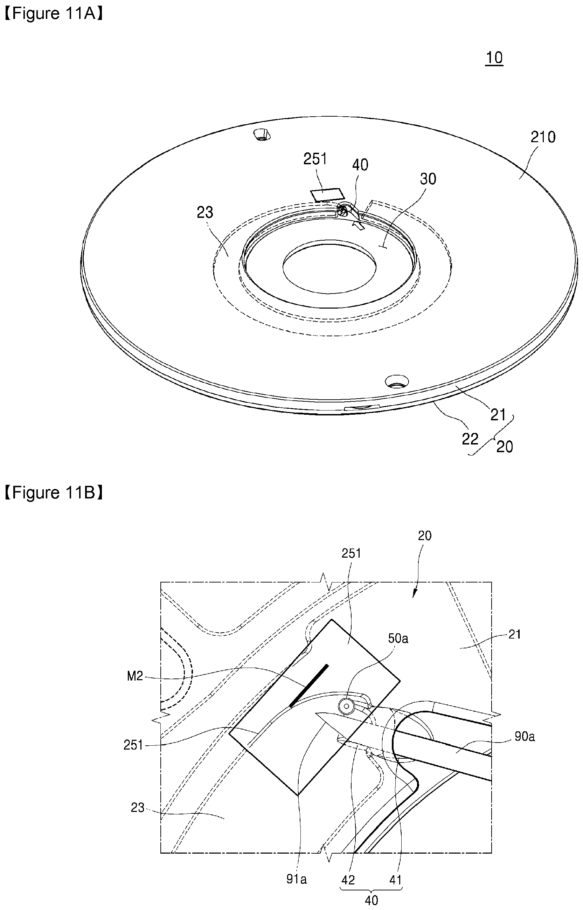

FIGS. 11A and 11B are respectively a perspective view and a partial plan view illustrating a modification of the body 20 of the microfluidic device 10 according to an exemplary embodiment. Referring to FIGS. 11A and 11B, a window 251 through which an inside of the chamber 23 may be viewed may be formed on the body 20. The window 251 may be transparent or semi-transparent. For example, the window 251 may be a portion of the upper plate 21 of the body 20 that is polished to have a higher transparency than other portions.

The window 251 may be disposed on a portion of the chamber 23 that is connected to the sample injection channel 42. For example, the window 251 may be disposed on an upstream portion of the sample injection channel 42. Accordingly, a depth to which the sample injection instrument 90 is inserted into the chamber 23 may be viewed through the window 251. A guide member 50a assists in setting the insertion direction and/or orientation of the sample injection instrument 90a.

A mark M2 for indicating an insertion position of the tip portion 91a of the sample injection instrument 90a may be made on the window 251. A user may insert the sample injection instrument 90a while viewing a position of the tip portion 91a of the sample injection instrument 90a through the window 251. The user may insert the sample injection instrument 90a with reference to the mark M2 so that the tip portion 91a of the sample injection instrument 90a is located at a predetermined position.

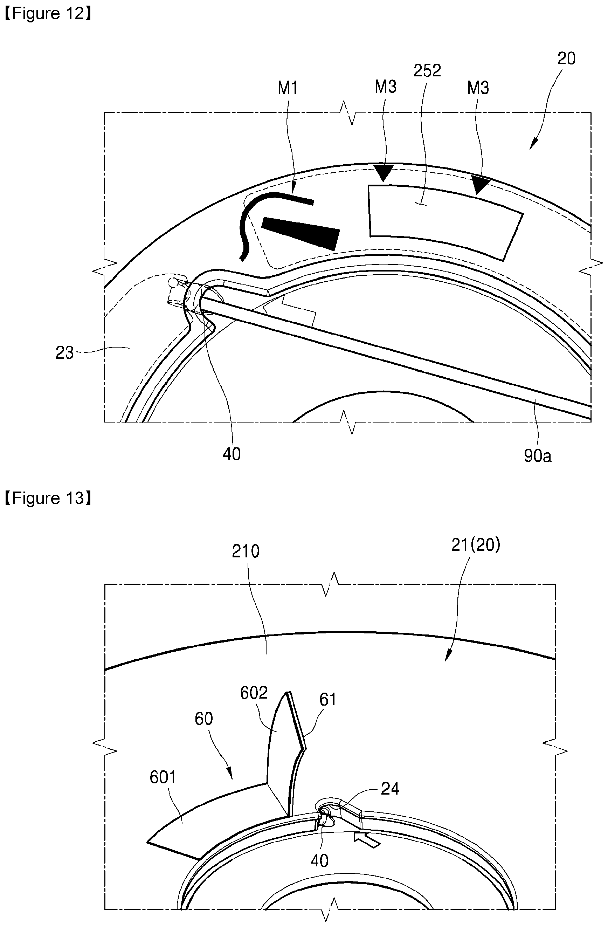

FIG. 12 is a partial plan view illustrating a modification of the body 20 of the microfluidic device 10 according to an exemplary embodiment. Referring to FIG. 12, a position of a window 252 that is disposed on the chamber 23 may be different from that of the window 251. For example, the window 252 may be disposed on a downstream portion of the chamber 23. Accordingly, an amount of a sample injected into the chamber 23 may be viewed through the window 252.

A predetermined mark M3 may be made on the window 252. The mark M3 may indicate an appropriate amount of a sample to be injected into the microfluidic device 10 for a test. For example, the mark M3 may indicate a range of amounts of a sample to be injected into the chamber 23.

When a syringe is used as the sample injection instrument 90, that is, when the sample injection instrument 90a is used, an amount of a sample may be variable, compared to a case where a pipette is used. Even when the sample injection instrument 90a such as a syringe by which an amount of a sample to be injected has to be manually adjusted by a user is used, the user may appropriately adjust an amount of a sample to be injected with reference to the window 252 and the mark M3 made on the window 252. Accordingly, when a sample is injected into the chamber 23, the possibility that the sample that is less or more than an appropriate amount is injected may be avoided.

The window 252, the mark M3, and the mark M1 may be formed on a separate member that may be adhered to the body 20, and then the separate member may be attached to the body 20. However, the present exemplary embodiment is not limited thereto, and the window 252, the mark M3, and the mark M1 may be directly formed on the body 20.

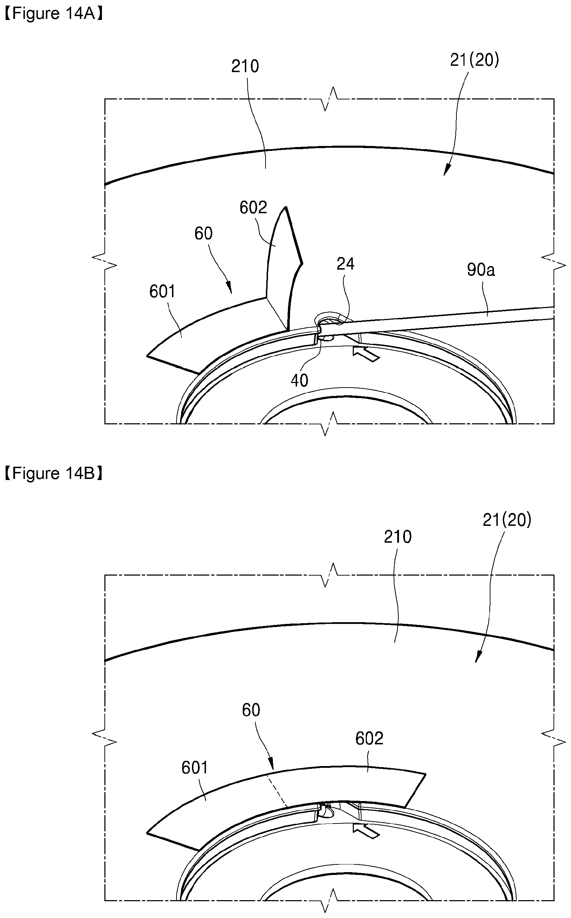

FIG. 13 is a partial perspective view illustrating a modification of the body 20 of the microfluidic device 10 according to an exemplary embodiment. FIGS. 14A and 14B are perspective views illustrating an example where the microfluidic device 10 of FIG. 13 is used.

Referring to FIG. 13, an absorption sheet 60 for absorbing a sample may be disposed on the body 20. The absorption sheet 60 may be formed of a porous paper material and at least one surface of the absorption sheet 60 may be adhered. A part 601 of the absorption sheet 60 may be adhered to the body 20, and another part 602 of the absorption sheet 60 may be adhered to a release paper 61 that may be easily detached. The part 602 of the absorption sheet 60 adhered to the release paper 61 may cover a portion around the cut portion 24.

Referring to FIG. 14A, a sample is injected into the chamber 23 by inserting the sample injection instrument 90a into the sample injection part 40. While the sample is injected or after the sample is completely injected, the release paper 61 adhered to the absorption sheet 60 is removed. Referring to FIG. 14B, the absorption sheet 60 from which the release paper 61 is removed is adhered to cover a portion around the cut portion 24. The absorption sheet 60 adhered to the portion around the cut portion 24 may absorb a sample attached to the top surface 210 of the body 20 when the sample is injected. Accordingly, the sample attached to the top surface 210 of the body 20 may be prevented from being scattered to the outside when the sample is analyzed. Accordingly, even when the sample is infected with disease-causing bacteria, the user's safety may be more effectively guaranteed by using the absorption sheet 60.

Referring back to FIG. 8, in the microfluidic device 10 according to an exemplary embodiment, a thickness t of the body 20 may range from about 1 mm to about 5 mm. As such, even when the thickness t of the body 20 is relatively small, since the sample injection instrument 90 is obliquely inserted into the body 20 through the sample injection hole 41 formed in the insertion part 30, the tip portion 91 of the sample injection instrument 90 may be inserted to a predetermined depth or more. For example, the tip portion 91 of the sample injection instrument 90 may be inserted into the body 20 to a depth of 1 mm or more.

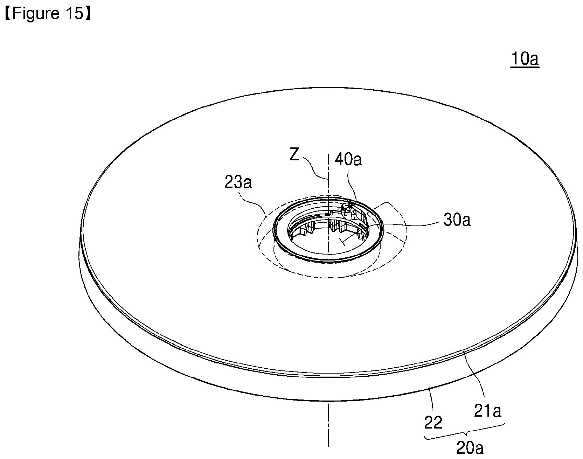

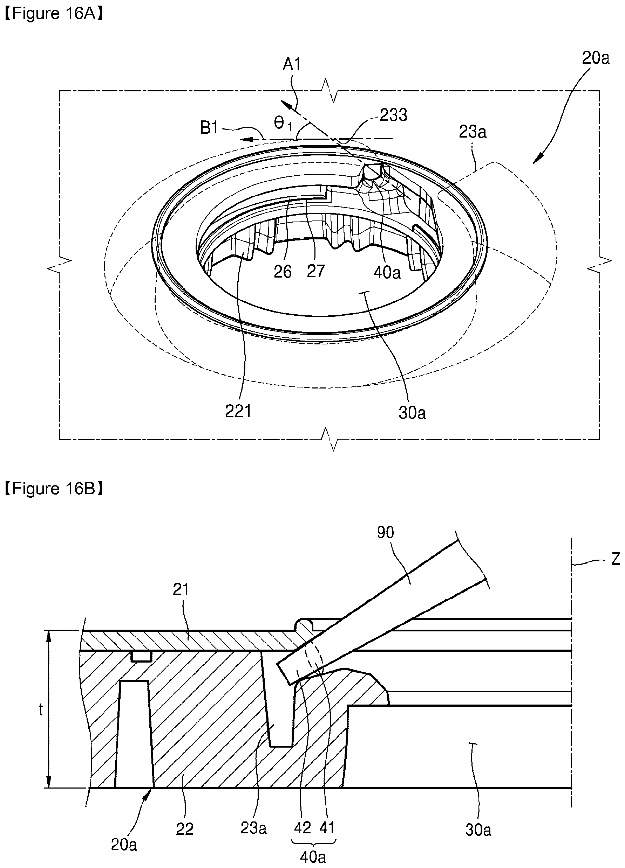

FIG. 15 is a perspective view of a microfluidic device 10a according to another exemplary embodiment. FIGS. 16A and 16B are respectively a partial perspective view and a partial cross-sectional view illustrating an insertion part 30a of the microfluidic device 10a of FIG. 15 and a sample injection part 40a formed on the insertion part 30a.

Referring to FIGS. 15, 16A, and 16B, the microfluidic device 10a includes a body 20a, the insertion part 30a formed at a center of rotation of the body 20a, and the sample injection part 40a formed so that at least a part of the sample injection part 40a extends from the insertion part 30a toward a chamber 23a to be inclined with respect to the rotational axis Z of the body 20a. The same elements as those in the previous exemplary embodiments will not be repeatedly exampled and the following will focus on a difference.

The thickness t of the body 20a may be relatively large. For example, the thickness t of the body 20a may range from about 5 mm to about 9 mm. A gear part 221 to be connected to the driver 105 (see FIG. 3) may be formed on the lower plate 22 of the body 20a.

A remaining sample receiver 26 may be formed on the insertion part 30a formed at the center of rotation of the body 20a to receive a remaining part of a sample remaining on a surface of the insertion part 30a when the sample that is injected into the sample injection part 40a overflows from the sample injection part 40a or when the tip portion 91 of the sample injection instrument 90 contacts the insertion part 30a. A stopping protrusion 27 for preventing the remaining sample from overflowing may be formed inside the remaining sample receiver 26.

The sample injection channel 42 may be formed so that a sample injection direction of the sample injection instrument 90 inserted along the sample injection channel 42 is inclined with respect to the wall surface 233 of the chamber 23a. For example, an angle θ1 formed between an extension direction A1 of the sample injection channel 42 and a tangent direction B1 of the wall surface 233 of the chamber 23a facing the sample injection channel 42 may be an acute angle. Accordingly, a sample injected through the sample injection instrument 90 may be prevented from colliding with the wall surface 233 of the chamber 23a and flowing back to the sample injection channel 42.

However, the extension direction A1 of the sample injection channel 42 is not limited thereto, and the wall surface 233 of the chamber 23 facing the sample injection channel 42 may be perpendicular to the tangent direction B1.

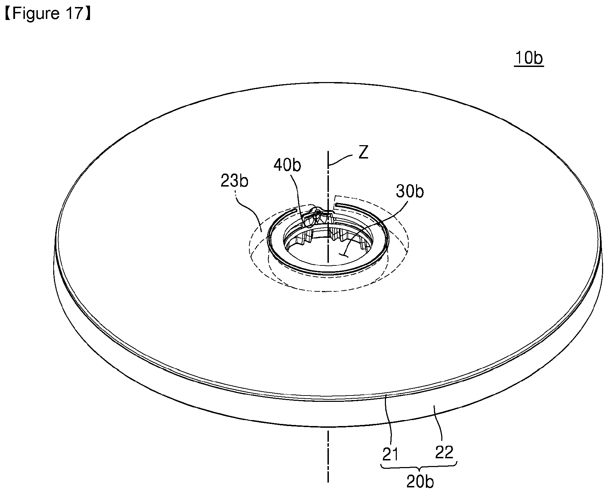

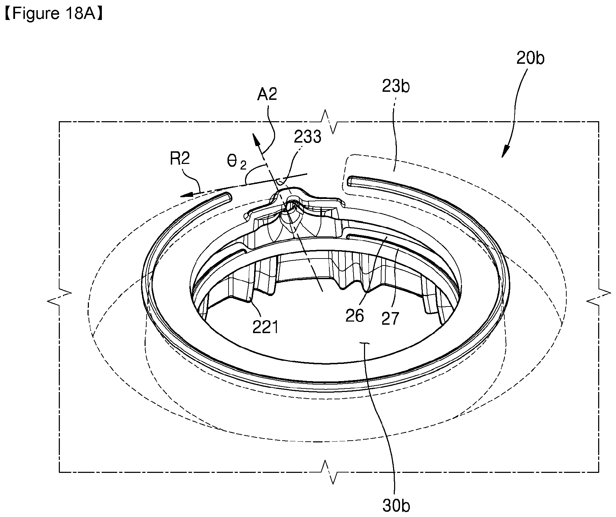

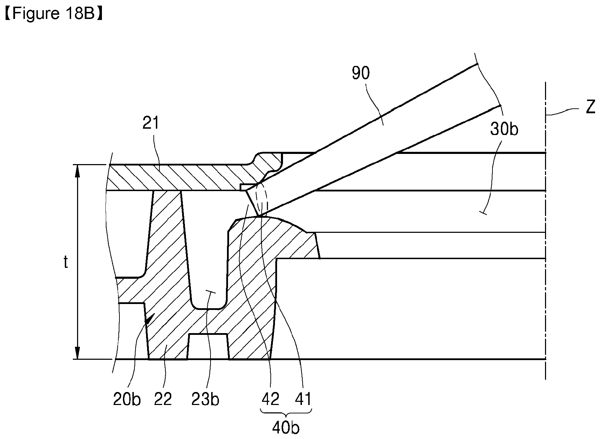

FIG. 17 is a perspective view of a microfluidic device 10b according to another exemplary embodiment. FIGS. 18A and 18B are respectively a partial perspective view and a partial cross-sectional view illustrating an insertion part 30b of the microfluidic device 10b of FIG. 17 and a sample injection part 40b formed on the insertion part 30b. Referring to FIGS. 17, 18A and 18B, the wall surface 233 of the chamber 23 facing the sample injection channel 42 may be perpendicular to a tangent direction R2. That is, an angle Θ2 formed between an extension direction A2 of the sample injection channel 42 and the tangent direction R2 of the wall surface 233 of the chamber 23b facing the sample injection channel 42 may be 90°. The chamber 23b may be formed in body 20b.

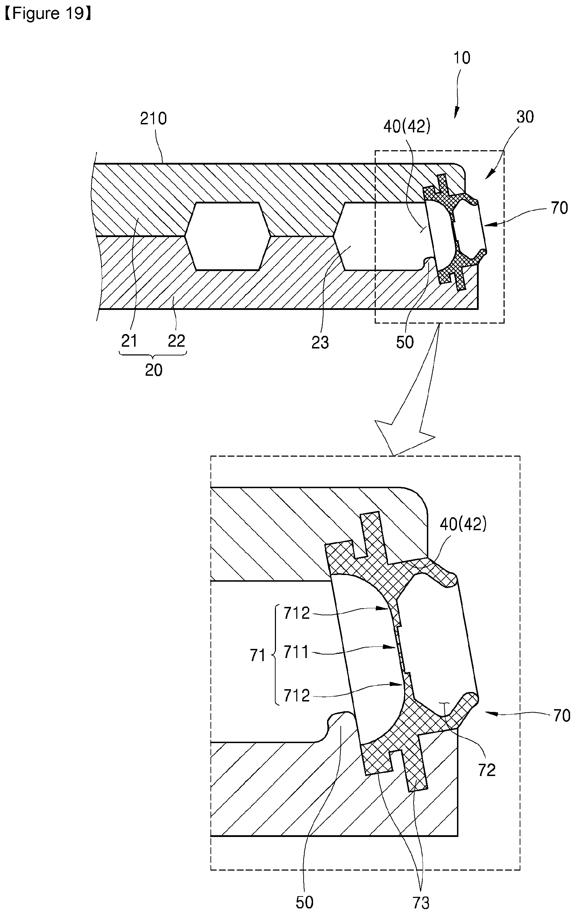

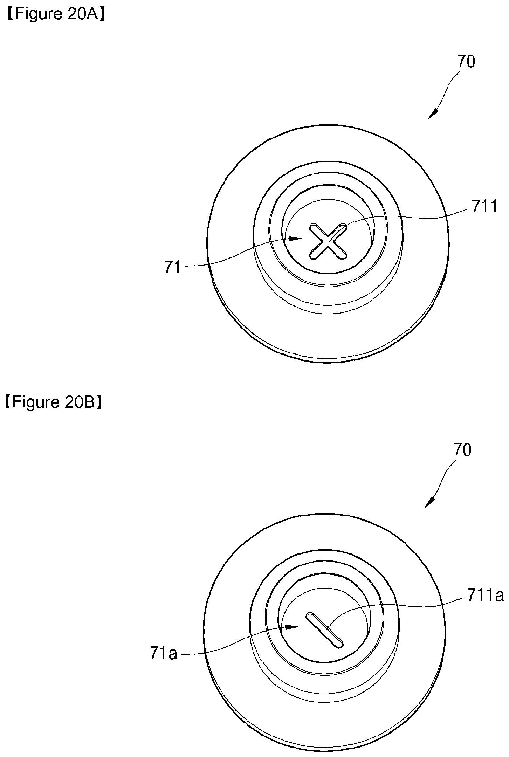

FIG. 19 is a cross-sectional view illustrating a modification of the microfluidic device according to an exemplary embodiment. FIGS. 20A through 20C are perspective views of a shielding member 70 of FIG. 19 according to exemplary embodiments.

Referring to FIGS. 19 and 20A, the microfluidic device 10 includes the body 20, the insertion part 30, the sample injection part 40, and the shielding member 70 disposed on the sample injection part 40. The same elements as those in the previous exemplary embodiments will not be repeatedly explained, and the following will focus on a difference.

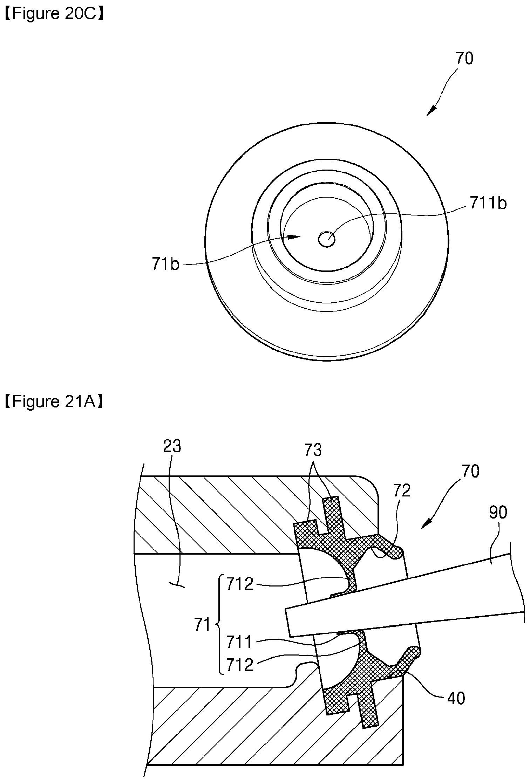

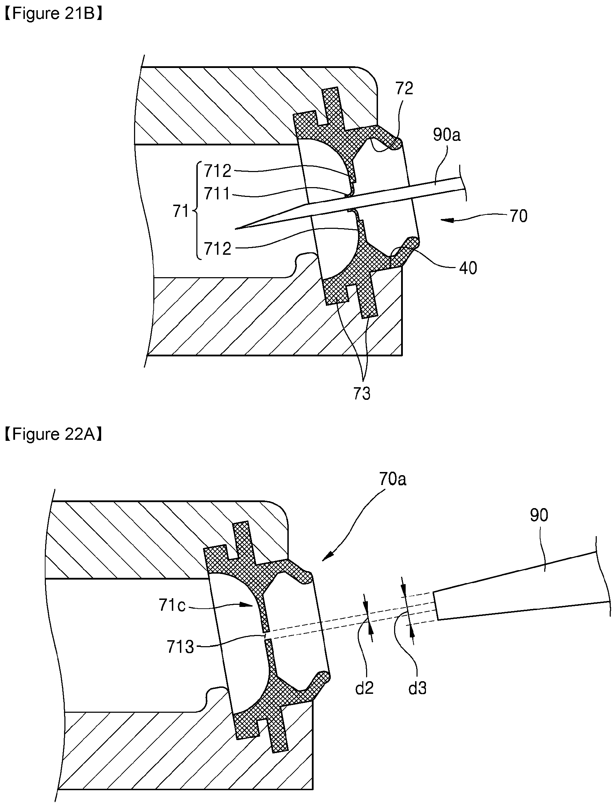

When a sample is injected into the chamber 23 through the sample injection instrument 90 or 90a (see FIGS. 21A and 21B), the shielding member 70 may prevent the injected sample from flowing back and leaking to the outside.

For example, at least a part of the shielding member 70 may be inserted into the sample injection part 40. The shielding member 70 may be formed of an elastic material that is elastically deformed when the shielding member 70 is inserted into the sample injection part 40. For example, the shielding member 70 may include a silicon material or a rubber material. As described above, the shielding member 70 formed of an elastic material may be fitted into the sample injection part 40.

The shielding member 70 may have a shielding surface 71 that crosses an extension direction of the sample injection part 40.

For example, a portion 711 of the shielding surface 71 may be thinner than other portions 712 so that the sample injection instrument 90 or 90a passes through the shielding surface 71.

For example, the portion 711 of the shielding surface 71 may be formed to have a cross shape as shown in FIG. 20A. However, a shape of the portion 711 of the shielding surface 71 is not limited thereto, and may be modified in various ways as long as the sample injection instrument 90 or 90a may easily pass through the portion 711 of the shielding surface 71. For example, a portion 711a of a shielding surface 71a may have a linear shape as shown in FIG. 20B, or a portion 711b of a shielding surface 71b may have a circular shape as shown in FIG. 20C.

FIGS. 21A and 21B are views illustrating an example where the sample injection instrument 90 or 90a is applied to the sample injection part 40 into which the shielding member 70 is inserted. Referring to FIGS. 21A and 21B, since the tip portion 91 or 91a of the sample injection instrument 90 or 90a such as a pipette or a syringe is pushed in a direction that crosses the shielding surface 71, the portion 711 of the shielding surface 71 may be cut and the sample injection instrument 90 or 90a may pass through the shielding surface 71. In this case, the shielding member 70 may surround the sample injection instrument 90 or 90a.

Accordingly, even when a sample that is injected into the chamber 23 through the sample injection instrument 90 or 90a flows back, the sample may be prevented from leaking to the outside due to the shielding member 70.

The shielding surface 71 is closed before the sample injection instrument 90 or 90a is inserted in the previous exemplary embodiment. However, the shielding surface 71 does not need to be closed even before the sample injection instrument 90 or 90a is inserted, and may be modified in various ways.

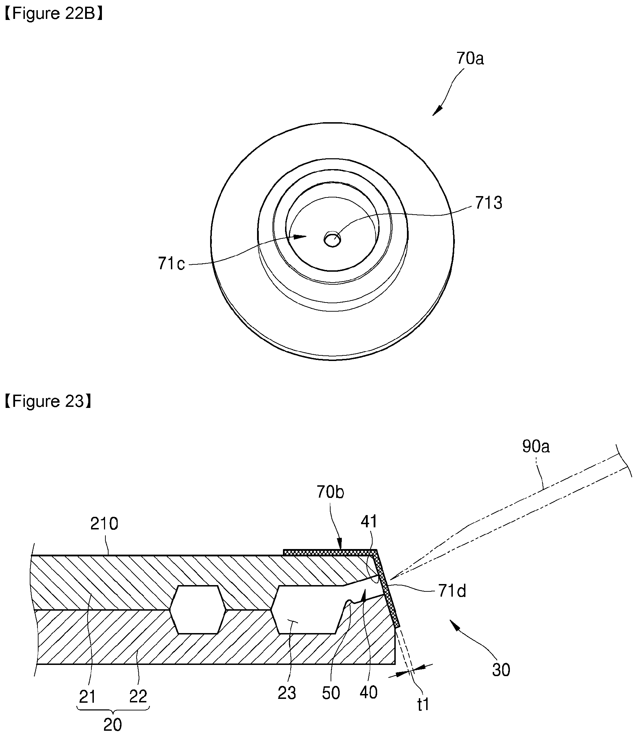

FIG. 22A is a cross-sectional view for explaining the microfluidic device 10 including a shielding member 70a having a shielding surface 71c. FIG. 22B is a perspective view of the shielding member 70a of FIG. 22A.

Referring to FIGS. 22A and 22B, a through-hole 713 may be formed in the shielding surface 71c of the shielding member 70a. A diameter d2 of the through-hole 713 is less than a diameter d3 of the sample injection instrument 90. The through-hole 713 into which the sample injection instrument 90 having a relatively large diameter is inserted may be elastically deformed. Accordingly, the shielding member 70a may surround the sample injection instrument 90 that passes through the shielding member 70a.

Referring back to FIG. 19, at least one uneven portion 72 may be formed on an inner circumferential surface of the shielding member 70. The uneven portion 72 may provide a space in which a sample is received. For example, when the sample injection instrument 90 or 90a passes through the shielding surface 71, a sample may remain on an outer surface of the shielding surface 71, or when a sample is injected through the sample injection instrument 90 or 90a, a slight amount of the sample may leak to the outside of the shielding surface 71. In this case, the remaining sample or the leaking sample may be received in the uneven portion 72. Accordingly, the sample may be prevented from being scattered to the outside of the microfluidic device 10.

A projecting portion 73 projecting outward may be formed on an outer circumferential surface of the shielding member 70. The projecting portion 73 may be elastically deformed. A shape of the sample injection channel 42 of the sample injection part 40 may correspond to a shape of the outer circumferential surface of the shielding member 70. Since facing surfaces between the shielding member 70 and the sample injection part 40 are formed to have a stepped portion, a sample may be more effectively prevented from leaking to the outside between the facing surfaces.

The shielding member 70 or 70a is disposed inside the sample injection part 40 in the previous exemplary embodiments. However, the shielding member 70 or 70a is not limited thereto, and may have any of various other shapes and arrangements.

For example, at least a part of a shielding member 70b may be disposed on the insertion part 30. FIG. 23 is a cross-sectional view for explaining an example where at least a part of the shielding member 70b is disposed on the insertion part 30. Referring to FIG. 23, a portion of the shielding member 70b may be disposed around the sample injection part on the insertion part 30 and another portion of the shielding member 70b may be disposed on the top surface 210 of the upper plate 21.

The shielding member 70b may overlap the sample injection hole 41 of the sample injection part 40 to be located on and around the sample injection hole 41. The shielding member 70b may be attached around the sample injection hole 41. Examples of a material of the shielding member 70b may include polyethylene (PE) and polyethylene terephthalate (PET).

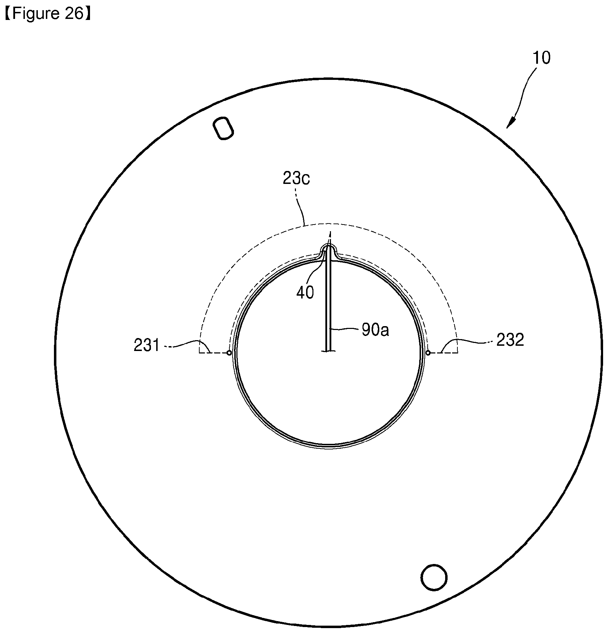

The shielding member 70b may be formed so that the sample injection instrument 90a easily passes through the shielding member 70b. For example, the shielding member 70 may have a thin-film shape having a small thickness t1. A portion of the shielding member 70b that overlaps the sample injection hole 41 may be a shielding surface 71d. The thickness t1 of the shielding member 70b may range from about 0.01 mm to about 0.3 mm. A thickness of the shielding surface 71d may range from about 0.01 mm to about 0.3 mm. In another exemplary embodiment, although not shown in FIG. 26, a portion of the shielding surface 71d may be thinner than other portions of the shielding surface 71d. The portion of the shielding surface 71d may have a cross shape, a linear shape, or a dot shape.

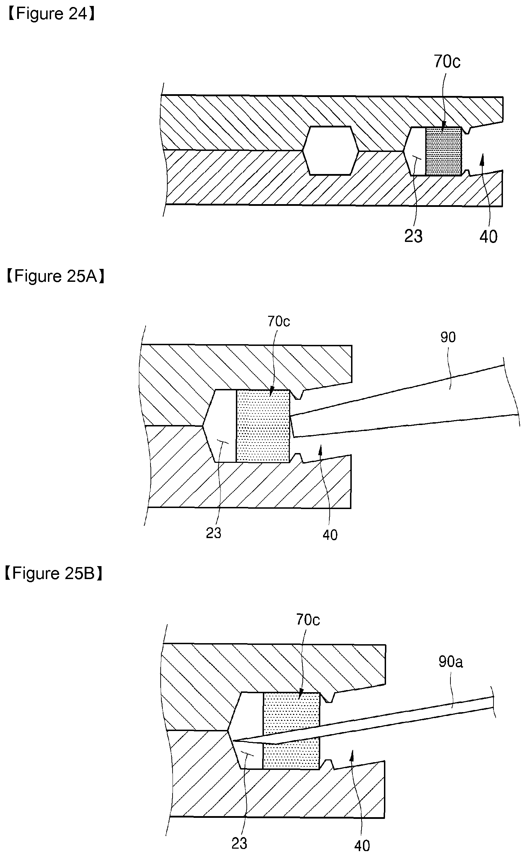

Alternatively, at least a part of a shielding member 70c may be disposed in the chamber 23. FIG. 24 is a cross-sectional view for explaining an example where at least a part of the shielding member 70c is disposed in the chamber 23. Referring to FIG. 24, the shielding member 70c may be disposed in the chamber 23. The shielding member 70c may be disposed on an extension line of an extension direction of the sample injection part 40.

The shielding member 70c may be formed of a material that may absorb a sample. For example, the shielding member 70c may be formed of a porous material. For example, the shielding member 70c may be formed of a plastic polymer foam material.

The sample injection instrument 90 or 90a may contact or pass through the shielding member 70c. For example, as shown in FIG. 25A, the sample injection instrument 90 having a dull tip portion, for example, a pipette, may contact the shielding member 70c. In a state where the sample injection instrument 90 contacts the shielding member 70c, when the sample injection instrument 90 discharges a sample, the discharged sample is absorbed by the shielding member 70c and is transmitted into the chamber 23. Alternatively, as shown in FIG. 25B, the sample injection instrument 90a having a sharp tip portion, for example, a syringe, may pass through the shielding member 70c. In a state where the sample injection instrument 90a passes through the shielding member 70c, when the sample injection instrument 90a discharges a sample, the discharged sample is directly transmitted into the chamber 23. In this case, when a great amount of a sample is injected, since the shielding member 70c may absorb the sample, the sample may be prevented from flowing back.

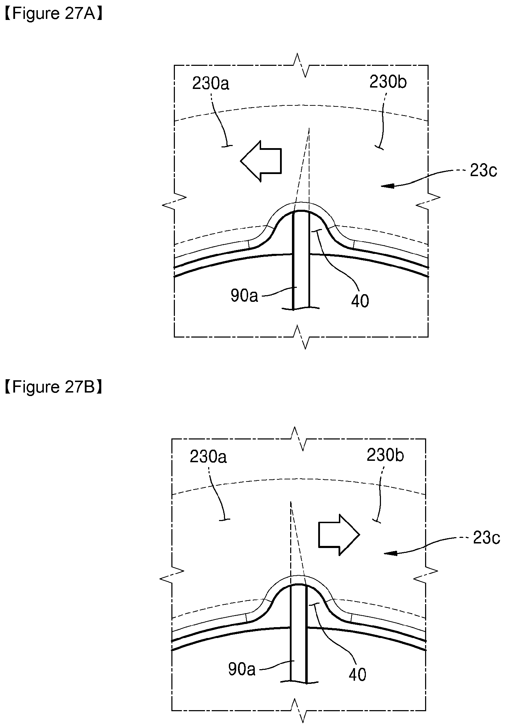

The sample injection part 40 is connected to an end portion of the chamber 23 in a direction in which a sample flows in the previous exemplary embodiments. However, a positional relationship between the chamber 23 and the sample injection part 40 of the microfluidic device 10 according to the present exemplary embodiment is not limited thereto. For example, as shown in FIG. 26, the sample injection part 40 may be connected between both end portions 231 and 232 of the chamber 23c in a direction in which a sample flows. Accordingly, as shown in FIGS. 27A and 27B, when the sample injection instrument 90a passes through the sample injection part 40 and a tip portion of the sample injection instrument 90 is disposed inside the chamber 23c, predetermined spaces 230a and 230b are formed on both sides of the sample injection part 40 in the chamber 23c. Accordingly, even when a direction in which a sample is injected is changed due to the sample injection instrument 90a, the injected sample may be prevented from flowing back to the sample injection part 40.

While the inventive concept has been particularly shown and described with reference to exemplary embodiments thereof by using specific terms, the embodiments and terms have merely been used to explain the inventive concept and should not be construed as limiting the scope of the inventive concept as defined by the claims.

The particular implementations shown and described herein are illustrative examples of the inventive concept and are not intended to otherwise limit the scope of the inventive concept in any way. For the sake of brevity, conventional electronics, control systems, software, and other functional aspects of the systems (and components of the individual operating components of the systems) may not be described in detail. Furthermore, the connecting lines or connectors shown in the various figures presented are intended to represent exemplary functional relationships and/or physical or logical couplings between the various elements. It should be noted that many alternative or additional functional relationships, physical connections or logical connections may be present in a practical device. Moreover, no item or component is essential to the practice of the inventive concept unless the element is specifically described as "essential" or "critical".

The use of any and all examples, or exemplary language (e.g., "such as") provided herein, is intended merely to better illuminate the inventive concept and does not pose a limitation on the scope of the inventive concept unless otherwise claimed. Numerous modifications and adaptations will be readily apparent to those of ordinary skill in this art without departing from the spirit and scope of the inventive concept.

## Claims

1. A microfluidic device comprising:
a body comprising:
a chamber in which a sample is received, the body being rotatable so that the sample received in the chamber is moved due to a centrifugal force;
an insertion part arranged at a center of rotation of the body and including a recess configured to receive a driver for rotating the body; and
a sample injection part disposed between the insertion part and the chamber and inclined with respect to a rotational axis of the body, the sample injection part being configured to receive a part of a sample injection instrument for injecting the sample into the chamber; and
a shield disposed on at least one of the sample injection part, the insertion part, and the chamber, the shield being configured to prevent the injected sample from flowing outside of the sample injection part when the sample is injected into the chamber through the sample injection instrument.

2. The microfluidic device of claim 1, wherein the sample injection part comprises:
a sample injection hole formed in the insertion part; and
a sample injection channel configured to connect the sample injection hole and the chamber, wherein at least a part of the sample injection channel is inclined with respect to the rotational axis.

3. The microfluidic device of claim 2, wherein the body comprises an upper plate arranged at a top of the chamber and a lower plate arranged on a bottom of the chamber,
wherein at least a part of the sample injection channel is arranged under the upper plate.

4. The microfluidic device of claim 2, wherein a projection is formed on at least one of the sample injection channel and the chamber.

5. The microfluidic device of claim 2, wherein the body comprises a cut portion which faces the insertion part and is arranged over the sample injection part, and an absorption sheet configured to absorb the sample which flows to a top surface of the body, the absorption sheet being configured to cover a portion of the top surface of the body around the cut portion..

6. The microfluidic device of claim 2, wherein the body comprises a mark which indicates at least one of a position of the sample injection part, an insertion direction of the sample injection instrument into the sample injection part, and an amount of the sample to be injected into the chamber.

7. The microfluidic device of claim 2, wherein the sample injection channel is configured so that a sample injection direction of the sample injection instrument inserted along the sample injection channel is inclined with respect to a tangent of an opposing wall surface of the chamber, wherein the opposing wall surface is opposite to the sample injection channel.

8. The microfluidic device of claim 2, wherein the body comprises a window through which an inside of the chamber is viewed.

9. The microfluidic device of claim 1, wherein the insertion part comprises a remaining sample receiver configured to receive a remaining sample remaining on a surface of the insertion part and a stopping protrusion configured to prevent the remaining sample received in the remaining sample receiver from overflowing.

10. The microfluidic device of claim 1, wherein at least a part of the shield is inserted into the sample injection part and comprises an elastic material, and
the shield comprises at least one uneven portion formed on an inner circumferential surface of the shield and a projecting portion formed on an outer circumferential surface of the shield.

11. The microfluidic device of claim 1, wherein at least a part of the shield is a film arranged on the insertion part and located outside the sample injection part.

12. The microfluidic device of claim 1, wherein the shield comprises a shielding surface that crosses an opening of the sample injection part,
wherein an insertion portion of the shielding surface is thinner than other portions of the shielding surface so that the sample injection instrument passes through the shielding surface, and,
wherein the insertion portion of the shielding surface has one of: a linear shape, a cross shape, and a circular shape.

13. The microfluidic device of claim 1, wherein the shield comprises a through-hole having a diameter that is less than a diameter of the sample injection instrument.

14. The microfluidic device of claim 1, wherein the shield is arranged inside the chamber and comprises a porous material.

15. A sample analysis apparatus comprising the microfluidic device of one of claims 1 to 14.
